(19) Europäisches Patentamt
European Patent Office
Office européen des brevets

(11) Publication number: **0 253 793**
**A2**

(12) # EUROPEAN PATENT APPLICATION

(21) Application number: 87870092.1

(22) Date of filing: 03.07.87

(51) Int. Cl.$^4$: C 08 J 5/12
C 08 J 7/12

(30) Priority: 04.07.86 GB 8616373

(43) Date of publication of application:
20.01.88 Bulletin 88/03

(84) Designated Contracting States:
AT BE CH DE ES FR GB GR IT LI LU NL SE

(71) Applicant: Monsanto Europe S.A.
Avenue de Tervuren 270-272 Letter Box 1
B-1150 Brussels (BE)

(72) Inventor: Burhin, Adolphe Georges
98 rue Longue
B-5998 Beauvechain (BE)

Orband, André
Maleizenstraat 51
B-3020 Herent (BE)

Stone, Christopher Robin
Heesterweg 11
B-1900 Overijse (BE)

(74) Representative: Lunt, John Cooper et al
Monsanto Europe S.A. Patent Department Avenue de Tervuren 270-272 Letter Box No 1
B-1150 Brussels (BE)

(54) **Bonding of polymers.**

(57) Polymers, especially hydrocarbon polymers containing ethylenic unsaturation such as vulcanised diene rubbers, can be bonded together by activating the surfaces to be bonded by treatment with a chemical free radical initiator and bringing the treated surfaces into direct contact. The use of a separate adhesive is unnecessary.

EP 0 253 793 A2

**Description**

BONDING OF POLYMERS

This invention relates to a process for the bonding of polymers, in particular to a process for the direct bonding of polymer surfaces.

It is known that the surfaces of polymers can be activated by treatment with free radical initiators, for instance halogen-donor compounds such as trichloroisocyanuric acid or organic peroxides. For example, it is reported that such pretreatment can be advantageously applied to SBR shoe soling material (South African Patent 71 03 318); to vulcanised rubber which is to be bonded to molten polyamide (JP-A-80 152 040); to vulcanised rubber articles which are to be joined in abutting relationship using a polyester-isocyanate adhesive (DE-A-3 304 146); and to the surface of vulcanised rubber to which identification or similar markings are to be applied (JP-A-78 117 080).

According to Shimbo et al, Nippon Setchaku Kyokai Shi, 1976, 12 (4), 121-7 (Chem Abs 1976, 85 95046 m), the application of organic peroxides to low- and high-density polyethylene or isotactic polypropylene prior to a hot air treatment improves the bonding of epoxy-polyamide adhesives.

Japanese Patent No. 60(1985) - 165227 discloses a process for bonding ultra-high molecular weight polyethylene to rubber, in which unvulcanised rubber containing organic peroxides is bonded to the polyethylene by heating to a temperature above the softening point of the polyethylene. Bonding occurs concurrently with the vulcanisation of the rubber due to the action of the organic peroxide.

A feature of such prior art disclosures which are concerned with the bonding of vulcanised rubber is that the pretreatment is used to enhance the effect of an adhesive, typically a polyurethane. We have now found that in fact no adhesive is required, and a strong bond can be formed simply by pressing together pieces of rubber, when the surfaces in contact have been pretreated with a free radical initiator.

The invention accordingly provides a process of bonding polymer surfaces in which, prior to bonding, the surfaces are activated by treatment with a chemical free radical initiator, characterised in that the treated surfaces are brought into direct contact to effect bonding.

In one aspect of the invention, the process is used to bond rubber components, for example to bond a new tread to a tyre carcass in the retreading of vehicle tyres, or to bond sheets of polymer used in the lining of water-storage or water-carrying systems, where water-tight bonds are required between overlapping sheet edges. In a further useful embodiment of the invention, the process is used to consolidate polymer particles, for instance particles of vulcanised rubber such as may be obtained by grinding scrap rubber.

In a preferred method of treating the surface of the polymer to be bonded, the surface is brought into contact with a solution of the free radical initiator in an inert solvent. Where the polymer is in the form of sheets or similar components, the surfaces to be treated can be coated with the solution. Particles of rubber to be treated can be mixed in a suitable mixer with sufficient of the solution to coat the particles, or the particles can be suspended in a solution and then filtered. Bonding can be effected immediately after coating or with some delay, because the treated surfaces or particles remain activated for a considerable period, depending on the type of activator and the storage temperature.

Evaporation of the solvent before bringing the treated surfaces together is not essential, but it is preferred to use a solvent which will evaporate before or during bonding. Residual high-boiling solvent in the rubber could have an adverse effect on the strength of the bond, and, in general, it is preferred to use a solvent having a normal boiling point not exceeding 150°C.

Preferred free radical initiators for use in the invention are halogen donor compounds and organic peroxides, but other free radical initiators, for example aliphatic azobisnitriles, diazonium compounds and persulphates can also be used.

Preferred halogen donor compounds are N-halo compounds, especially, for economic reasons, N-chloro compounds, although N-bromo compounds can also be used. Examples of such compounds are heterocyclic bromo- and chloroamines with the halogen attached to the nitrogen in the ring, for example glycolusil chloramine

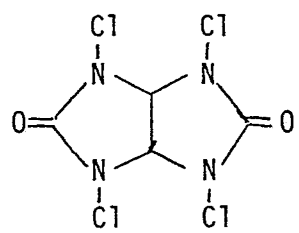

1,3-dichloro-5,5-dimethylhydantoin, 1,3,5-trichloro-2,4-dioxohexahydrotriazine, N-bromosuccinimide and N-chlorosuccinimide; and N-chloroamino condensation products from cyanamide derivatives, for example dichloroazodicarbonamidine and N-chloromelamines, such as $N^2$, $N^4$, $N^6$-trichloromelamine, dichloroisocyanuric acid and trichloroisocyanuric acid; and N-chlorosulphonamides and related compounds, for example

Chloramine-T.

Organic peroxides useful in the process of the invention include peroxides and hydroperoxides, for example di-tert. butyl peroxide, tert. butylcumyl peroxide, dicumyl peroxide, α,α'-bis (tert. butyl peroxy)-p-diisopropyl benzene, 2,5-dimethyl-2,5-di-tert. butyl peroxy) hexane, 2,5-dimethyldi-(tert. butyl peroxy) hexane-3, 2,5-dimethyl-2,5-di(benzoyl peroxy) hexane, tert. butyl peroxy-isopropyl carbonate, and 1,1-bis(tert. butyl peroxy)-3,5,5-trimethylcyclohexane.

In the preferred process of the invention, the free radical initiator is employed in solution. As solvents for such solutions there can be used any solvent in which the free radical initiator has sufficient solubility to give a useful concentration (for instance from 1% to 60% by weight) and with respect to which the free radical initiator is substantially inert. A typical concentration range in practice is from 5 to 15% by weight.

Where the free radical initiator is a halogen donor compound, examples of suitable solvents are halohydrocarbons, for instance dichloro-ethane, dichloroethylene, trichloroethylene, carbon tetrachloride and chlorobenzene, aromatic hydrocarbons, for instance toluene and xylene, ketones, for instance acetone, methyl ethyl ketone, methyl isobutyl ketone and cyclohexanone, ethers, especially cyclic ethers, for instance tetrahydrofuran and dioxan, and esters, for instance ethyl acetate. Suitable solvents for peroxide and hydroperoxide radical initiators include saturated aliphatic and cycloaliphatic hydrocarbons, e.g. cyclohexane.

Polymers which can be bonded in accordance with the invention, which can be the same or different, are generally hydrocarbon polymers, or copolymers where at least one monomer from which the copolymer is derived is a hydrocarbon. Preferably, at least a small amount of unsaturation is present in at least one of the polymers to be bonded, and such unsaturation is especially desirable where the free radical initiator is a halogen donor compound. Provided unsaturation is present, polymers other than those where at least one monomer from which the copolymer is derived is a hydrocarbon, can be bonded in accordance with the invention. For example the unsaturation can be present in a side chain, as for instance in certain silicone rubbers.

The process is especially effective where at least one of the polymers is a vulcanised diene rubber. Suitable diene rubbers include natural rubber, synthetic cis-polyisoprene, polybutadiene, copolymers of 1,3-butadiene with other monomers, for example styrene, acrylonitrile, isobutylene or methyl methacrylate, and ethylene-propylene-diene terpolymers, in which the diene is for example 1,4-hexadiene, dicyclopentadiene or ethylidene-5 norbornene.

The vulcanised rubbers will usually contain conventional fillers, for example carbon black or silica, and other conventional additives such as antioxidants or antiozonants. The way in which the rubber was vulcanised before bonding is not critical; it will normally have been vulcanised using a conventional vulcanisation system under conditions giving optimum physical properties. For example, sulphur or sulphur donors such as N,N'-dithiodimorpholine can be used as vulcanising agents, with thiazole accelerators such as the benzothiazolesulphenamides, 2-mercaptobenzothiazole, 2-benzothiazyl disulphide. With certain rubbers, for example EPDM, secondary or ultra-accelerators, for instance the thiurams and dithiocarbamates will normally also form part of the vulcanisation system.

Other polymers which can be bonded in accordance with the invention include polyolefins such as polyethylene and polypropylene and ethylene/propylene copolymers including ethylene/propylene rubber (EPR). As indicated above, at least one of the polymers involved in the process preferably contains unsaturation, but the process is nevertheless useful for bonding EPR to EPR.

In the process of the invention, the surfaces or particles to be bonded are held together, for example under a pressure of 0.1 to 50 MPa above atmospheric. In the bonding of surfaces, exerting a pressure of, for instance, up to 5 MPa, is generally suitable. Polymer particles will normally be consolidated in a mould in which the pressure may be, for instance, up to 30 MPa. Pressure can be applied mechanically or by air pressure.

The surfaces are preferably heated during bonding to speed the bonding process. The optimum temperature for bonding will depend on the particular polymer involved and the free radical initiator used, but will normally be within the range 30-180° C. Bond formation will nevertheless occur at lower temperatures than this, for example within the range 0-30° C so that the process of the invention can be used where it is not possible to raise the temperature during bonding above the ambient temperature. Bond strength will of course take longer to develop at lower temperatures.

The surfaces treated with the free radical initiator may be smooth or roughened. However, an advantage of the present invention is that bond strength obtained with smooth surfaces is at least as high as that obtained with rough surfaces, unlike bonding with adhesives where roughening of the surfaces prior to the application of the adhesive is generally considered essential.

Preferably the polymer surfaces are cleaned or degreased by wiping with a degreasing solvent such as perchloroethylene or toluene before treatment with the free radical initiator.

The use of radical initiators in the bonding of polymers in accordance with the invention is illustrated by the following description of experimental procedures and results.

Samples of various vulcanised rubbers were prepared from the rubber formulations shown below. A sample of each formulation was tested in a Monsanto Rheometer, to determine the time to maximum torque (T. Max), and the bulk of the formulation was then vulcanised in a mould to produce a smooth-surfaced sheet having a thickness of 2 mm. Times and temperatures of vulcanisation are given below. Abbreviations have the following meanings:

CBS N-Cyclohexylbenzothiazole-2-sulphenamide

DTM N,N′-Dithiodimorpholine
MBS 2-(Morpholinothio)benzothiazole
TMTD Tetramethylthiuram disulphide
ZDEC Zinc diethyldithiocarbamate
MBTS 2-Benzothiazyl disulphide
TMQ Polymerised 2,2,4-trimethyl-1,2-dihydroquinoline
phr Parts by weight per 100 parts by weight of rubber.

Natural Rubber Formulation

| Ingredient | phr |
|---|---|
| Rubber | 100 |
| Carbon Black N330 | 50 |
| Processing oil | 3 |
| Zinc oxide | 5 |
| Stearic acid | 2 |
| Sulphur | 2.5 |
| CBS | 0.6 |

Cured at 141°C. to $T_{90}$

Ethylene-propylene-diene modified
Rubber (EPDM) Formulation No. 1

| Ingredient | phr |
| --- | --- |
| EPDM (Diene = ethylidene-5-norbornene) | 100 |
| Carbon Black N762 | 125 |
| Carbon Black N550 | 125 |
| Extender oil | 125 |
| Zinc oxide | 5 |
| Stearic acid | 2 |
| Sulphur | 0.5 |
| DTM | 1.5 |
| MBS | 2 |
| TMTD | 1 |

Cured at 160°C to T max.

Ethylene-propylene-diene modified
Rubber (EPDM) Formulation No. 2

| Ingredient | phr |
| --- | --- |
| EPDM (Diene = dicyclopentadiene) | 100 |
| Carbon Black N762 | 125 |
| Carbon Black N550 | 125 |
| Extender oil | 125 |
| Zinc oxide | 5 |
| Stearic acid | 2 |
| Sulphur | 1 |
| ZDEC | 1.8 |
| MBS | 1.2 |
| DTM | 2 |

Cured at 160°C to T max.

Ethylene Propylene Rubber (EPR) Formulation

| Ingredient | phr |
|---|---|
| EPR | 100 |
| Carbon Black N550 | 60 |
| TMQ | 2 |
| Zinc oxide | 5 |
| Triallyl cyanurate | 2 |
| Dicumyl peroxide (40% solution) | 10 |

Cured at 180°C to $T_{90}$

Nitrile Rubber (NBR) Formulation

| Ingredient | phr |
|---|---|
| NBR | 100 |
| Carbon black N339 | 50 |
| Dioctyl phthalate | 15 |
| Cumar Resin* | 15 |
| Zinc oxide | 5 |
| Stearic acid | 1 |
| Sulphur | 1.5 |
| MBTS | 2 |

*A coumarone-indene resin used as a tackifier/plasticizer to improve processability.

Cured at 153°C to $T_{90}$

To evaluate the bonding of rubber to rubber, the test used was a modification of ASTM D 816-82, Method B-Adhesion Strength in Shear. Rectangular strips having a length of 60 mm and a width of 10 mm were cut from the sheets of vulcanised rubber prepared as described above.

A surface having an area of about 1 $cm^2$ at an end of each of two strips to be bonded was wiped over with a cloth moistened with toluene and was then coated with a solution of a free radical initiator. The treated areas of the two strips were then placed in contact, with the strips aligned longitudinally and with an area of contact (area of bonding) of 1 $cm^2$. The strips were clamped together at the overlap and heated to effect bonding. Bonded specimens were allowed to age for 24 hours before testing. The strength of the bond was measured by clamping the free ends of the specimen in the grips of a tensile tester, using shims to ensure that the applied force was in the plane of the bonded area. The clamps of the tensile tester were separated at 0.8 mm/s, and the stress at which the specimen broke was recorded.

Results (Adhesion in MPa) are given in the Table below. Bonding Agent A was a 10% w/w solution of trichloroisocyanuric acid in cyclohexanone. During bonding, the overlap of the strips was held under a pressure of 2 MPa for 60 seconds at 100°C.

For the results reported under Bonding Agent B, the surfaces to be bonded were treated as described for Bonding Agent A with a solution of trichlorocyanuric acid, but before being brought into contact, each was coated with a conventional two-component polyurethane-based adhesive.

Bonding Agent C was a 50% w/w solution of dicumyl peroxide in cyclohexane. For bonding, the overlap of the strips was held under a pressure of 2 MPa for 5 minutes at a temperature of 140°C.

Bonding Agent D was a 25% w/w solution of 2,2′-Azobis(isobutyronitrile) in chloroform. For bonding, the strips of rubber were held at the overlap under a pressure of 2 MPa for 5 minutes at a temperature of 150°C.

| Polymers Bonded | Bonding Agent | | | |
|---|---|---|---|---|
| | A | B | C | D |
| NR/NR | 2.89 | 2.23 | 3.20 | 0.62 |
| NBR/NBR | 2.35 | - | - | - |
| EPDM-1/EPDM-1 | >1.18 | 1.00 | >1.10 | 0.80 |
| EPDM-2/EPDM-2 | >0.98 | - | - | - |
| NR/EPDM-1 | >0.78 | 1.00 | >1.00 | - |
| NR/EPDM-2 | 0.86 | - | - | - |
| EPR/EPR | - | 0.75 | 0.36 | 0.18 |
| PP/EPDM-1 | - | - | >0.89 | - |

> Indicates that one of the strips broke before the bond ruptured.

In applying the process of the invention to the consolidation of rubber particles, 100 parts by weight of vulcanised rubber crumb having a particle size of 30 mesh (particles of approximately 0.6 mm and smaller) were mixed well in a Papenmeier mixer with 5 parts by weight of a 50% by weight solution of dicumyl peroxide in cyclohexane. The mixture was transferred to a press and cured at 150°C under a pressure of 18 MPa for 10 minutes.

The resulting product had the following physical properties.

| | | |
|---|---|---|
| Tensile strength (MPa) | : | 9.85 |
| Elongation at break (%) | : | 325 |
| 100% Mod. MPa. | : | 1.65 |
| 200% Mod. MPa. | : | 3.74 |
| 300% Mod. MPa. | : | 7.95 |
| Hardness | : | 57 |
| Abrasion, vol. loss ($mm^3$) | : | 284.0 |
| Resilience (%) | : | 80.0 |
| Density | : | 1.069. |

For comparison, a conventional process for reclamation of rubber crumb was used by mixing 100 parts by weight of the same rubber crumb with 3.2 parts by weight of zinc 0,0-di-n-butylphosphorodithioate, (62% active, 38% inert carrier and 2.5 parts by weight of sulphur. The mixture was heated at 145°C for 32 minutes which represented optimum cure for this system.

The product had:

Tensile strength (MPa) : 5.0
Elongation at break (%) : 70

The much superior properties of the product made by the process of the invention are apparent.

In an experiment to demonstrate the effect of temperature on bond strength, test strips were prepared from EPDM Formulation No. 1, the ends to be bonded were coated with a 5% w/w solution of trichloroisocyanuric acid in cyclohexanone (Bonding Agent D), and the coated ends were clamped and bonded for 5 minutes according to the procedure described above.

The following results on the variation of bond strength with temperature were obtained:

| Temperature (°C) | Adhesion (MPa) |
|---|---|
| 25 | 0.64 |
| 50 | 0.84 |
| 75 | 1.18 |
| 100 | 1.22 |
| 125 | >1.26 |

To show that roughening the surfaces to be bonded does not improve bond strength, test strips were prepared from EPDM Formulation No. 1. In one group of three specimens, the end portions of pairs to be bonded were roughened on a buffing wheel and then cleaned by wiping with toluene before coating with Bonding Agent D. In a second group of three specimens, the smooth end portions of pairs to be bonded were wiped with toluene and coated with Bonding Agent D. The specimens were bonded at 125° C for 5 minutes at 2 MPa. Bond strengths were determined as above. The average bond strength for the group where the bonded surfaces were buffed was >1.73 MPa; that for the other group was 1.88 MPa.

**Claims**

1. A process for bonding polymer surfaces, in which, prior to bonding, the surfaces are activated by treatment with a chemical free radical initiator, characterised in that the treated surfaces are brought into direct contact to effect bonding.
2. A process according to Claim 1 in which the treatment comprises coating the surfaces with a solution of the free radical initiator in an inert solvent.
3. A process according to either of Claims 1 and 2 in which the free radical initiator is a halogen-donor compound.
4. A process according to Claim 3 in which the halogen-donor compound is trichloroisocyanuric acid.
5. A process according to either of Claims 1 and 2 in which the free radical initiator is a peroxy compound.
6. A process according to Claim 5 in which the peroxy compound is an organic peroxide.
7. A process according to any of Claims 1 to 6 in which each polymer is selected from hydrocarbon polymers and copolymers derived from at least one hydrocarbon monomer.
8. A process according to Claim 7 in which at least one of the polymers contains ethylenic unsaturation.
9. A process according to Claim 8 in which at least one of the polymers is a vulcanised diene rubber.
10. A process according to Claim 9 in which the diene rubber is natural rubber, nitrile rubber or an ethylene - propylene - diene terpolymer rubber.
11. A process according to any of Claims 1 to 10 in which the polymer surfaces are the surfaces of articles.
12. A process according to Claim 11 in which the articles are sheets.
13. A process according to Claim 11 in which one surface is the inner surface of a tyre tread, and the other is the corresponding outer surface of a tyre carcass.
14. A process according to any of Claims 1 to 10 in which the surfaces are the surfaces of polymer particles which are bonded by compacting in a mould to form a coherent mass.
15. A process according to any of Claims 1 to 14 in which bonding is effected at 30-180° C.
16. A process according to any of Claims 1 to 15 in which bonding is effected at a pressure of from 0.1 to 50 MPa above atmospheric pressure.